# NEUE EUROPÄISCHE PATENTSCHRIFT

(11) **EP 0 791 511 B2**
(45) Veröffentlichungstag und Bekanntmachung des Hinweises auf die Entscheidung über den Einspruch: **04.02.2004**
(45) Hinweis auf die Patenterteilung: 08.11.2000
(21) Anmeldenummer: 97102307.2
(22) Anmeldetag: 13.02.1997
(51) Int. Cl.: B60R 21/22

(54) **Seitenaufprall-Schutzeinrichtung für Fahrzeuginsassen**
Side-impact protection device for vehicle passengers
Dispositif de protection des passagers d'un véhicule contre les chocs latéraux

(30) Priorität: 23.02.1996 DE 29603316 U
(43) Veröffentlichungstag der Anmeldung: 27.08.1997
(60) Teilanmeldung: 99116167.0
(73) Patentinhaber: TRW Occupant Restraint Systems GmbH & Co. KG, 73551 Alfdorf (DE)
(72) Erfinder: Stütz, Michael, 73565 Spraitbach (DE); Eyrainer, Heinz, 73550 Waldstetten (DE)
(74) Vertreter: Degwert, Hartmut, Dipl.-Phys.

(56) Entgegenhaltungen:
- WO-A-94/19215
- GB-A- 2 191 450
- GB-A- 2 261 636
- US-A- 5 470 103
- PATENT ABSTRACTS OF JAPAN vol. 095, no. 008, 29.September 1995 & JP 07 117605 A (HONDA MOTOR CO LTD), 9.Mai 1995,
- PATENT ABSTRACTS OF JAPAN vol. 016, no. 099 (M-1220), 11.März 1992 & JP 03 276844 A (MAZDA MOTOR CORP), 9.Dezember 1991,

## Beschreibung

Die Erfindung betrifft eine Seitenaufprall-Schutzeinrichtung für Fahrzeuginsassen nach dem Oberbegriff des Anspruchs 1.

Eine derartige Schutzeinrichtung ist bereits aus der JP 03 276 844 A bekannt. Bei dieser Schutzeinrichtung ist im Bereich des Dachrahmens und der B-Säule jeweils ein Gasgenerator untergebracht, der jeweils einen Gassack aufbläst, der den Dachrahmen bzw. die B-Säule abdeckt. Die Unterbringung des gefalteten Gassacks längs des Dachrahmens ist bei Kopf-Seitengassäcken stets ein Problem, da der zur Verfügung stehende Raum extrem begrenzt ist. Insbesondere das Packvolumen des Gassacks nimmt sehr viel Platz ein. Bei der bekannten Schutzeinrichtung hat der Gassack nur ein geringes Volumen, da er im Rückhaltefall nur den Dachrahmen und nur geringfügig die Seitenscheiben abdeckt. Großflächigere Gassäcke, die nahezu die gesamte Seitenscheibe abdecken, haben einen größeren Platzbedarf. Nachteilig an der bekannten Schutzeinrichtung ist ferner, daß sie zwei aufblasbare Gassäcke, einerseits für den Dachrahmen und andererseits für die B-Säule, vorsieht, was den Aufwand und die Kosten erhöht.

Ebenfalls einen gattungsbildenden Stand der Technik offenbart die EP 0 694 444 A2. Sie zeigt in einer Ausführungsform einen Gassack, der sich längs eines Dachrahmens erstreckt und mittels einer Klemmvorrichtung in Form eines Keders am Rahmenteil gehalten ist. Der Gassack ist über seine gesamte Länge an der Klemmvorrichtung angenäht.

Eine weitere Schutzeinrichtung ist bereits aus der DE 34 22 263 C2 bekannt, bei der ein mit Gas gefüllter Vorratsbehälter zum Aufblasen des Kopf-Gassacks im Fahrzeuglängsträger, also im Türschwellenbereich, angeordnet und über eine Leitung mit dem Kopf-Gassack verbunden ist. Der unter dem Verkleidungsteil am Dachrahmen angeordnete, gefaltete Kopf-Gassack sprengt das Verkleidungsteil im Kollisionsfall entweder weg oder verformt es, um sich seitlich von einem Fahrzeuginsassen zwischen dessen Kopf und der Seitenscheibe zu erstrecken. Die Lage des aufgeblasenen Kopf-Gassacks sowie seine Entfaltungsrichtung sind jedoch nicht exakt definiert, was zu Verzögerungen beim Aufblasvorgang sowie zu Sicherheitsrisiken führen kann, wenn der Gassack nicht exakt seitlich vom Kopf des Fahrzeuginsassen angeordnet ist oder sich während des Seitenaufpralls relativ zu diesem verschieben kann.

Aus der DE-OS 22 49 988 ist eine Seitenaufprall-Schutzeinrichtung mit einem aufblasbaren Kopf-Gassack bekannt, welcher zusammen mit einem Gasdruckbehälter in einer Aussparung in einem Verkleidungsteil am Dachrahmen befestigt ist, so daß das Verkleidungsteil den gefalteten Kopf-Gassack nicht umgibt und dieser von außen leicht (ungewollt) beschädigt werden kann. Der Behälter erstreckt sich zudem über die gesamte Länge des Kopf-Gassacks und ist entsprechend groß ausgebildet, was seine Unterbringung im Fahrzeug erschwert.

Aufgabe der Erfindung ist es, eine Seitenaufprall-Schutzeinrichtung zu schaffen, bei welcher die Lage des Kopf-Gassacks in entfaltetem Zustand sowie der Ablauf des Aufblasvorgang selbst gut reproduzierbar festgelegt sind.

Diese Aufgabe wird bei einer Seitenaufprall-Schutzeinrichtung der eingangs angegebenen Art mit den Merkmalen des Kennzeichens des Anspruchs 1 gelöst. Der Kopf-Gassack ist damit schon in ungefaltetem Zustand in seiner gesamten Längserstreckung im Fahrzeug selbst fest definiert angeordnet, da er in Längsrichtung ungefaltet ist. Der Entfaltungsvorgang muß deshalb hauptsächlich nur noch in vertikaler Richtung und in Richtung zum Kopf des Fahrzeuginsassen erfolgen. Ein ungeordneter Entfaltungsvorgang kann so vermieden werden. Zudem ist die Lage des Kopf-Gassacks damit auch in aufgeblasenem Zustand fest definiert, so daß es bei der erfindungsgemäßen Seitenaufprall-Schutzeinrichtung nicht zu einer Verschiebung des Kopf-Gassacks zum Fahrzeug kommen kann.

Gemäß einer bevorzugten Ausführungsform ist der Kopf-Gassack an seinen am Dachrahmen befestigten Enden mit Befestigungsösen versehen, was die Montage am Dachrahmen vereinfacht, da dort nur noch entsprechende Haken oder Schrauben vorgesehen sein müssen.

Gemäß einer weiteren Ausführungsform ist auch ein zugeordneter, langgestreckter Gasgenerator parallel zum gefalteten Kopf-Gassack unter dem Verkleidungsteil angeordnet, so daß lange Gasführungswege wie bei der Schutzeinrichtung nach der DE 34 22 263 C2 vermieden werden.

Der Gasgenerator kann eine zylinderförmige Außenkontur aufweisen und weiter an seiner äußeren Umfangsmantelfläche verteilte Gasausströmöffnungen aufweisen, wodurch sich ein schneller Entfaltungsvorgang ergibt.

Vorzugsweise erstreckt sich der Gasgenerator in Längsrichtung des gefalteten Kopf-Gassacks maximal über das mittlere Drittel des Kopf-Gassacks, was die Kompaktheit der erfindungsgemäßen Schutzeinrichtung erhöht.

Die erfindungsgemäße Schutzeinrichtung ist in einer bevorzugten Ausführungsform durch eine Montageplatte, auf der der Gasgenerator und der Kopf-Gassack vormontiert sind, am Dachrahmen befestigtbar. Dadurch kann die Schutzeinrichtung als komplett vormontiertes Modul geliefert werden, das schnell in ein Fahrzeug einbaubar ist.

Ist der Gasgenerator im Inneren des Kopf-Gassacks angeordnet, wird die Befestigung des Gasgenerators mit dem Kopf-Gassacks vereinfacht.

Auch die Montageplatte kann im Inneren des Kopf-Gassacks angeordnet sein, wobei vorzugsweise ein Teil zumindest einer Schrauben-Mutterverbindung zur Befestigung der Seitenaufprall-Schutzeinrichtung drehfest an der Montageplatte angeordnet ist und eine Öffnung an der zugehörigen Stelle im Kopf-Gassack vorhanden sein muß, durch die sich ein Schraubenschaft erstrecken kann. Ist eine Schraube an der Montageplatte zum Beispiel mit ihrem Schraubenkopf angeschweißt, so erstreckt sich der Schraubenschaft durch die Öffnung im Gassack nach außen, wo eine entsprechende Mutter zur Befestigung der Seitenaufprall-Schutzeinrichtung aufgeschraubt werden kann. Ist hingegen eine Mutter an der Montageplatte befestigt, kann entsprechend eine Schraube von außen her in die Mutter eingedreht werden.

Zudem ist es je nach Fahrzeuggeometrie unter Umständen vorteilhaft, wenn außerhalb des Kopf-Gassacks eine Adapterplatte angeordnet ist, welche mit der Montageplatte verbindbar und am Dachrahmen arretierbar ist. Die Montage wird durch die Adapterplatte vereinfacht, denn sie kann sich zu leicht zugänglichen Stellen im Bereich des Dachrahmens erstrecken.

Eine besonders einfache und sichere Befestigung des Gasgenerators an der Montageplatte wird gemäß einer vorteilhaften Ausführungsform dadurch erreicht, daß die Montageplatte schellenartig ausgebildet ist und den Gasgenerator umgreift. Der Durchmesser der schellenartigen Montageplatte wird durch eine Klemmeinrichtung verringert, wobei diese Einrichtung zugleich die Einrichtung zum Befestigen der Montageplatte sein kann, womit sich eine Teileeinsparung erzielen läßt.

Die Montageplatte kann darüber hinaus selbstverständlich auch außerhalb des Kopf-Gassacks angeordnet werden.

Um dem Kopf-Gassack während eines Transports in seinem gefalteten Zustand zu halten, sind dieser und der Gasgenerator mittels einer sie umgebenden Folie oder eines Kunststoffrohres auf der Montageplatte vormontiert.

Ist das Verkleidungsteil im Bereich des Kopf-Gassacks gemäß einer bevorzugten Ausführungsform eine Klappe, die durch den Entfaltungsvorgang des Kopf-Gassacks geöffnet wird, welche fakultativ durch Sollbruchstellen im Verkleidungsteil gebildet ist, wird der Entfaltungsvorgang schneller erfolgen, und die Entfaltungsrichtung ist eindeutig vorbestimmbar, da der Kopf-Gassack keine hohen Kräfte zur Deformation von Teilen aufbringen muß.

Die Klappe kann zur Festlegung der Entfaltungsrichtung des Kopf-Gassacks beitragen, wenn sie mit einer Einrichtung zum Begrenzen ihres maximalen Öffnungswinkels versehen ist, die zum Beispiel ein Fangband umfaßt, das einerseits an der Klappe und andererseits am Dachrahmen befestigt ist.

Die Geometrie der Klappe und ihr maximaler Öffnungswinkel sind vorzugsweise so auf den Kopf-Gassack abgestimmt, daß die Klappe die Entfattungsrichtung des Kopf-Gassacks schräg in Richtung zur Seitenscheibe lenkt und sich der Kopf-Gassack vor die Seitenscheibe schiebt.

Darüber hinaus ist gemäß einer weiteren Ausführungsform vorgesehen, daß das Verkleidungsteil so am Dachrahmen befestigt ist, daß sich der Kopf-Gassack zwischen dem Verkleidungsteil und dem Dachrahmen beim Entfaltungsvorgang hindurchschieben kann, wodurch sich eine Art Fischmaulöffnung ergibt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 die erfindungsgemäße Seitenaufprall-Schutzeinrichtung mit nicht entfaltetem Kopf-Gassack,
Fig. 2 die Seitenaufprall-Schutzeinrichtung nach Fig. 1 mit entfaltetem Kopf-Gassack,
Fig. 3 eine Querschnittsansicht der Seitenaufprall-Schutzeinrichtung nach Fig. 1 gemäß einer ersten Ausführungsform,
Fig. 4 eine Querschnittsansicht einer Seitenaufprall-Schutzeinrichtung gemäß einer zweiten Ausführungsform in nicht montiertem Zustand,
Fig. 5 eine Längsansicht der Seitenaufprall-Schutzeinrichtung nach Fig. 4,
Fig. 6 eine Seitenansicht der erfindungsgemäßen Seitenaufprall-Schutzeinrichtung gemäß einer weiteren Ausführungsform mit entfaltetem Kopf-Gassack,
Fig. 7 eine Querschnittsansicht der Seitenaufprall-Schutzeinrichtung nach der Linie A-A in Fig. 6, und
Fig. 8 eine Querschnittsansicht der Seitenaufprall-Schutzeinrichtung nach der Linie B-B in Fig. 6.

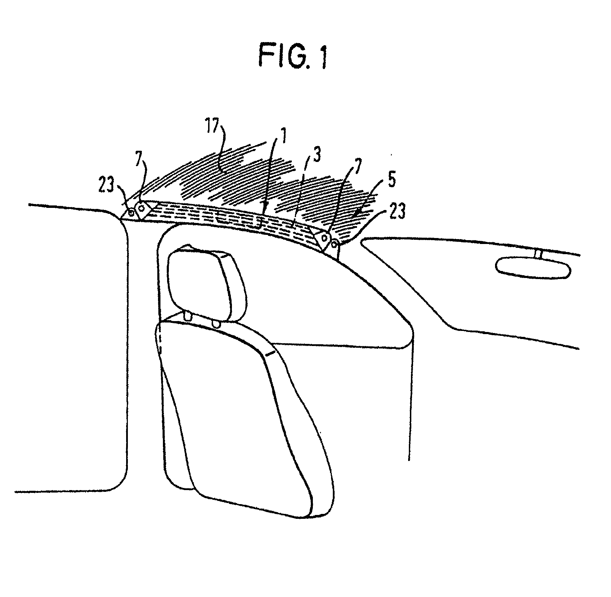

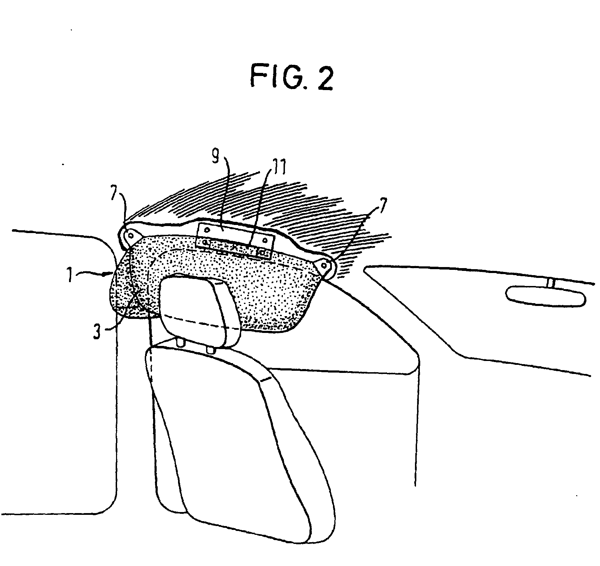

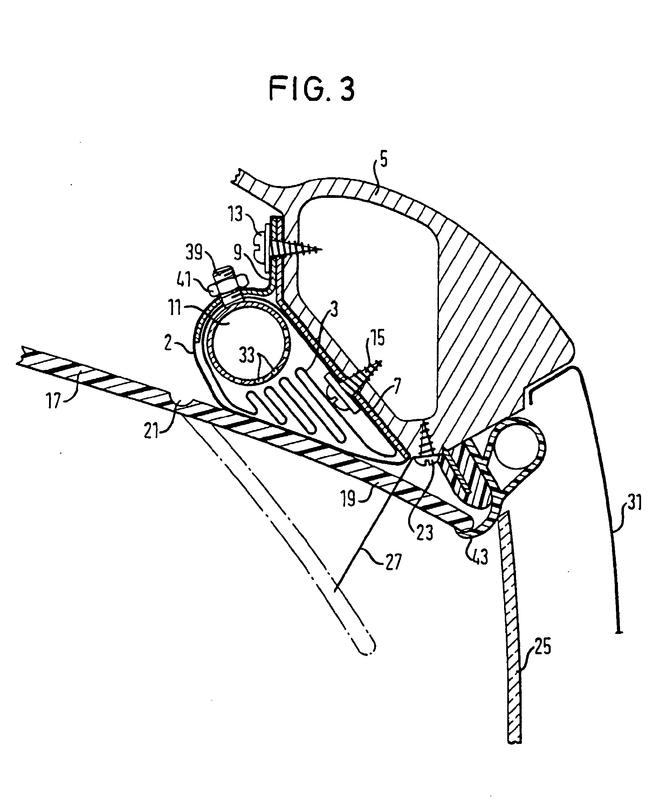

In Fig. 1 ist eine Seitenaufprall-Schutzeinrichtung 1 mit einem langgestreckt gefalteten Kopf-Gassack 3 gezeigt, welche an einem Dachrahmen 5 eines Fahrzeugs oberhalb des Türausschnittes unter einem Verkleidungsteil 17, welches den Fahrzeughimmel darstellt, angeordnet ist. Zur Verdeutlichung ist das Verkleidungsteil 17 in den Figuren 1 und 2 im Bereich der Seitenaufprall-Schutzeinrichtung 1 entfernt gezeichnet. Der gefaltete Kopf-Gassack 3 erstreckt sich von der Fahrzeug-A-Säule zur Fahrzeug-B-Säule und ist an zwei, an seinen beiden äußeren, im entfalteten Zustand oberen Enden 7 gelegenen Stellen am Dachrahmen 5 befestigt, wie Fig. 2 besser zu entnehmen ist. Der Kopf-Gassack 3 hat an diesen Stellen ohrenartige Fortsätze mit Befestigungsösen, durch die sich in den Dachrahmen 5 eindrehbare, in Fig. 3 gezeigte Schrauben 15 erstrecken. Ein Gasgenerator 11 erstreckt sich in Längsrichtung des gefalteten Kopf-Gassacks 3 über annähernd das mittlere Drittel des Kopf-Gassacks 3 und ist mittels einer Montageplatte 9 am Dachrahmen 5 befestigt, was in Fig. 3 eindeutig gezeigt ist.

Gemäß in Fig. 3 hat der Gasgenerator 11, der im Inneren des Kopf-Gassacks 3 angeordnet ist, eine zylinderförmige Außenkontur mit zahlreichen, an seiner äußeren Umfangsmantelfläche verteilten Gasausströmöffnungen 33, welche einem gefalteten Bereich des Kopf-Gassacks 3 zugewandt sind. Ein an der Umfangsmantelfläche angeformter Stehbolzen 39 mit einem Außengewinde erstreckt sich durch eine Öffnung im Kopf-Gassack 3 hindurch nach außen und weiter durch eine Öffnung in einer Y-förmigen Montageplatte 9. Ein Steg der Montageplatte 9, an welchem der Gasgenerator 11 über seinen Stehbolzen 39 mittels einer Mutter 41 befestigt ist, ist in seiner Form der Außenkontur des Gasgenerators 11 angepaßt und umgibt diesen teilweise, so daß beim Festdrehen der Mutter 41 der Gasgenerator 11 gegen den Steg der Montageplatte 9 gepreßt wird, wodurch die Öffnung im Kopf-Gassack 3 im Bereich des Stehbolzens 39 gegen Gasentweichen abgedichtet ist. An dem anderen Steg der Y-förmigen Montageplatte 9 sind ebenfalls Öffnungen vorgesehen, durch die sich Schrauben 13 zur Befestigung der Seitenaufprall-Schutzeinrichtung 1 am Dachrahmen 5 erstrecken. Die Seitenaufprall-Schutzeinrichtung 1 ist als komplett vormontierte Einheit einfach an den Dachrahmen 5 anschraubbar, wobei die Vormontage einerseits durch den Stehbolzen 39 und andererseits durch eine die Montageplatte 9, den gefalteten Kopf-Gassack 3 und den Gasgenerator 11 umgebende Folie 2 erfolgt. Das Verkleidungsteil 17, unter dem die Seitenaufprall-Schutzeinrichtung 1 von außen nicht sichtbar angeordnet ist, ist zum Teil als Klappe 19 ausgebildet, welche durch den Entfaltungsvorgang des Kopf-Gassacks 3 öffnenbar ist. Die Klappe 19 wird durch eine U-förmig verlaufende Sollbruchstelle 21 im Verkleidungsteil 17 gebildet. Der in Richtung zu einer Fahrzeugtür 31 weisende Rand der Klappe 19 ist in ein schienenförmiges, am Dach rahmen 5 bestigtes Halteteil 43 eingeklinkt. Eine Einrichtung zum Begrenzen des maximalen Öffnungswinkels der Klappe 19 in Form eines Fangbandes 27 ist einerseits an der Klappe 19 und andererseits über eine Schraube 23 am Dachrahmen 5 befestigt, wobei die geöffnete Klappe 19 in Fig. 3 mit strichpunktierten Linien angedeutet ist.

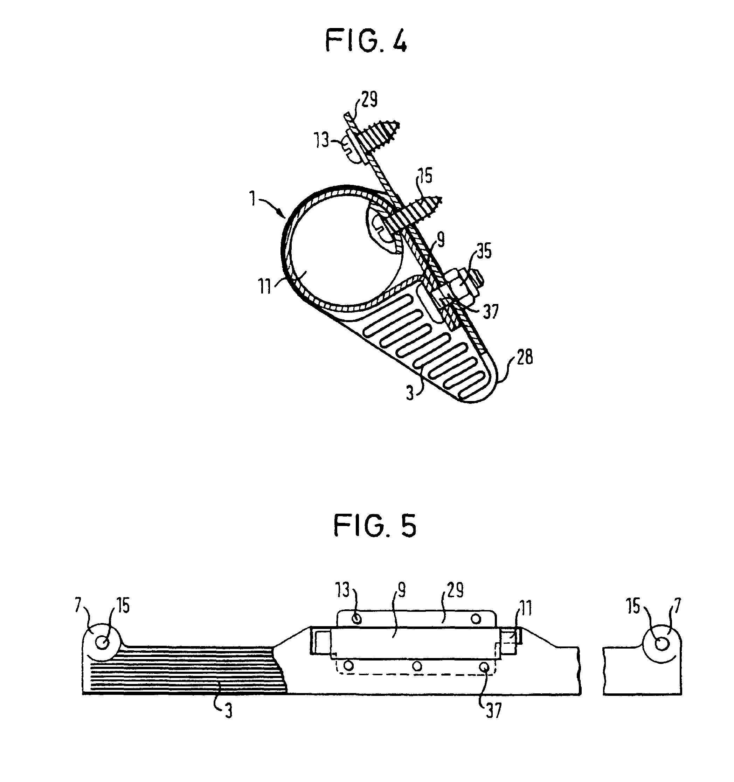

Fig. 4 zeigt eine zweite Ausführungsform der als komplette Einheit vormontierbaren Seitenaufprall-Schutzeinrichtung 1, bei welcher auch die Montageplatte 9 innerhalb des Kopf-Gassacks 3 angeordnet ist, indem sie sich schellenförmig um den Gasgenerator 11 herum erstreckt. Eine Schrauben-Mutterverbindung, bestehend aus einer Schraube 37 und einer Mutter 35, dient einerseits als Einrichtung zum Befestigen der Montageplatte 9 an einer außerhalb des Kopf-Gassacks 3 befindlichen Adapterplatte 29 und andererseits als Einrichtung zum Klemmen der schellenartig ausgebildeten Montageplatte 9. Hierzu ist der Kopf der Schraube 37 mit der Montageplatte 9 verschweißt. Ein zugehöriger Schraubenschaft erstreckt sich durch eine Öffnung in der Montageplatte 9 und in dem Kopf-Gassack 3 hindurch nach außen und weiter durch eine Öffnung in der Adapterplatte 29. Durch die Mutter 35 wird die Montageplatte 9 zusammen mit dem Kopf-Gassack 3 gegen die Adapterplatte 29 gedrückt und an ihrfixiert, wodurch die Öffnung im Kopf-Gassack 3 keine Leckgasströmungen zuläßt. Über die Schrauben 13 ist die Adapterplatte 29 und damit die gesamte Seitenaufprall-Schutzeinrichtung 1 am Dachrahmen 5 anschraubbar. Zur besseren Montage und zum leichteren Transport umgibt ein dünnes, geschlitztes Kunststoffrohr 28 den gefalteten Kopf-Gassack 3 und damit den Gasgenerator 11 und teilweise auch die Adapterplatte 29.

In Fig. 5 ist der Kopf-Gassack 3 im Bereich der Montageplatte 9 und des Gasgenerators 11 aufgeschnitten gezeigt. Dabei ist zu erkennen, daß die Montageplatte 9 sowie die Adapterplatte 29 seitlich nicht bis zu den oberen Enden 7 des Kopf-Gassacks 3 verläuft, sondern sich lediglich bis zu den seitlichen Enden des Gasgenerators 11 erstreckt.

Die Montage der Seitenaufprall-Schutzeinrichtung 1 als komplettes Modul erfolgt einfach mittels der beiden Schrauben 13 und durch ein anschließendes Eindrehen von Schrauben 15 durch die Befestigungsösen in den Dachrahmen 5.

Da der Kopf-Gassack 3 in Längsrichtung ungefaltet, also in seiner gesamten Längsausdehnung bereits festgelegt im Fahrzeug arretiert ist, ergibt sich eine stabile Gassacklage im entfalteten Zustand. Das Entfalten selbst wird bei einem Seitenaufprall durch Zünden des im Gasgenerator 11 befindlichen pyrotechnischen Materials eingeleitet, woraufhin Gas über die Gasausströmöffnungen 33 aus dem Gasgenerator 11 ausströmt und den Kopf-Gassack 3 entfaltet, worauf die Klappe 19 aus dem Halterteil 43 herausspringt und so weit in Richtung Fahrzeugmitte aufklappt, wie es das Fangband 27 erlaubt. Die Geometrie der Klappe 19 und ihr maximaler Öffnungswinkel sind so auf den Kopf-Gassack 3 abgestimmt, daß die Klappe 19 die Entfaltungsrichtung des Kopf-Gassacks 3 schräg in Richtung zu einer Seitenscheibe 25 lenkt. Bei voll entfaltenem Kopf-Gassack 3 ist ein Zwischenraum zwischen der geöffneteten Klappe 19 und der Seitenscheibe 25 durch den Kopf-Gassack 3 ausgefüllt. Der Kopf-Gassack 3 erstreckt sich unmittelbar angrenzend zur Seitenscheibe 25 nach unten und kann sich teilweise an dieser abstützen. Der Kopf-Gassack 3 selbst muß sich auf Grund seiner festgelegten Lage in Längsrichtung hauptsächlich nur nach unten und in Richtung zum Kopf eines Fahrzeuginsassen entfalten, wodurch ein schnelles, gut vorbestimmbares Entfalten ermöglicht wird. Die Klappe 19 ist sehr schmal gehalten und steht in aufgeschwenktem Zustand kaum nach innen vor, um kein Verletzungsrisiko für den Kopf des Fahrzeuginsassen darzustellen.

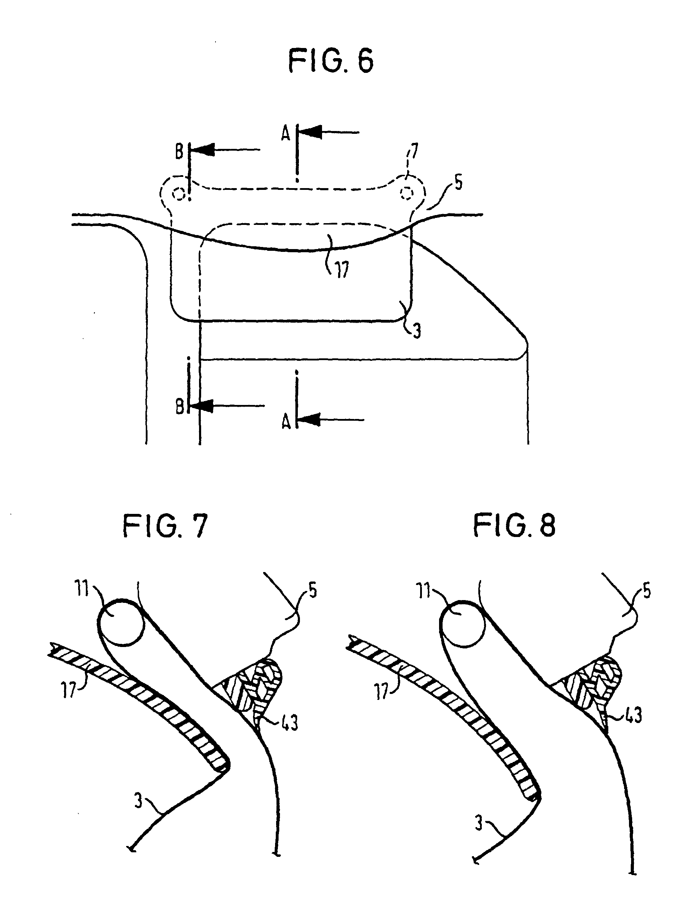

Anstatt der Klappe 19 kann das Verkleidungsteil 17, wie in den Figuren 6 bis 8 gezeigt, so am Dachrahmen 5 befestigt sein, daß sich der Kopf-Gassack 3 beim Entfaltungsvorgang zwischen diesem und dem Dachrahmen 5 hindurchschiebt und sich somit eine fischmaulartige Öffnung ergibt. Hierzu ist das Verkleidungsteil 17 über das Halteteil 43 am Dachrahmen 5 befestigt. Das Verkleidungsteil 17 löst sich beim Entfaltungsvorgang des Kopf-Gassacks 3 vom Halteteil 43 wie die Figuren 7 und 8 zeigen. Im Bereich außerhalb der Enden 7 bleibt es jedoch über das Halteteil 43 am Dachrahmen 5 befestigt. Das Verkleidungsteil 17 baucht so nach innen etwas aus, so daß sich in der Mitte des Kopf-Gassacks 3 ein breiterer Schlitz ergibt, durch den sich der Kopf-Gassack 3 hindurchschieben kann. Bei dieser Ausführungsform werden keine zusätzlichen Aufreißvorrichtungen benötigt.

## Patentansprüche

1. Seitenaufprall-Schutzeinrichtung für Fahrzeuginsassen, mit einem aufblasbaren Kopf-Gassack (3), der im gefalteten, eingebauten Zustand unter einem Verkleidungsteil (17) am Dachrahmen (5) eines Fahrzeugs angeordnet ist, **dadurch gekennzeichnet, daß** der Kopf-Gassack (3) in Längsrichtung ungefaltet ist und zumindest an seinen beiden in Fahrzeuglängsrichtung äußeren, im entfalteten Zustand oberen Enden (7) am Dachrahmen (5) punktuell befestigt ist.

2. Seitenaufprall-Schutzeinrichtung nach Anspruch 1, **dadurch gekennzeichnet, daß** der Kopf-Gassack (3) an seinen am Dachrahmen (5) befestigten Enden (7) mit Befestigungsösen versehen ist.

3. Seitenaufprall-Schutzeinrichtung nach Anspruch 1 oder 2, **dadurch gekennzeichnet, daß** ein dem Kopf-Gassack (3) zugeordneter, langgestreckter Gasgenerator (11) parallel zum gefalteten Kopf-Gassack (3) unter dem Verkleidungsteil (17) angeordnet ist.

4. Seitenaufprall-Schutzeinrichtung nach Anspruch 3, **dadurch gekennzeichnet, daß** der Gasgenerator (11) eine zylinderförmige Außenkontur hat.

5. Seitenaufprall-Schutzeinrichtung nach Anspruch 3 oder 4, **dadurch gekennzeichnet, daß** der Gasgenerator (11) an seiner äußeren Umfangsmantelfläche verteilte Gasausströmöffnungen (33) hat.

6. Seitenaufprall-Schutzeinrichtung nach einem der Ansprüche 3 bis 5, **dadurch gekennzeichnet, daß** der Gasgenerator (11) in Längsrichtung des gefalteten Kopf-Gassacks (3) im mittleren Drittel des Kopf-Gassacks (3) angeordnet ist.

7. Seitenaufprall-Schutzeinrichtung nach Anspruch 6, **dadurch gekennzeichnet, daß** sich der Gasgenerator (11) maximal über das mittlere Drittel des gefalteten Kopf-Gassacks (3) erstreckt.

8. Seitenaufprall-Schutzeinrichtung nach einem der vorstehenden Ansprüche, **gekennzeichnet durch** eine am Dachrahmen (5) befestigbare Montageplatte (9), auf der ein Gasgenerator (11) und der Kopf-Gassack (3) vormontiert sind.

9. Seitenaufprall-Schutzeinrichtung nach einem der vorstehenden Ansprüche, **dadurch gekennzeichnet, daß** der Gasgenerator (11) im Inneren des Kopf-Gassacks (3) angeordnet ist.

10. Seitenaufprall-Schutzeinrichtung nach Anspruch 8 und 9, **dadurch gekennzeichnet, daß** die Montageplatte (9) im Inneren des Kopf-Gassacks (3) angeordnet ist.

11. Seitenaufprall-Schutzeinrichtung nach Anspruch 10, **dadurch gekennzeichnet, daß** auf der Montageplatte (9) ein Teil zumindest einer Schrauben-Mutterverbindung (35, 37) zur Befestigung der Seitenaufprall-Schutzeinrichtung (1) drehfest angeordnet ist und eine Öffnung an der zugehörigen Stelle im Kopf-Gassack (3) vorhanden ist, durch die sich ein Schraubenschaft erstrecken kann.

12. Seitenaufprall-Schutzeinrichtung nach Anspruch 11, **dadurch gekennzeichnet, daß** die Montageplatte (9) mit einer außerhalb des Kopf-Gassacks (3) angeordneten Adapterplatte (29) verbindbar ist, welche am Dachrahmen (5) arretierbar ist.

13. Seitenaufprall-Schutzeinrichtung nach einem der vorstehenden Ansprüche, **dadurch gekennzeichnet, daß** die Montageplatte (9) schellenartig ausgebildet ist und den Gasgenerator (11) umfaßt und daß eine Einrichtung zum Befestigen der Montageplatte (9) als Einrichtung zum Klemmen der schellenartig ausgebildeten Montageplatte (9) dient.

14. Seitenaufprall-Schutzeinrichtung nach Anspruch 8 oder 9, **dadurch gekennzeichnet, daß** die Montageplatte (9) außerhalb des Kopf-Gassacks angeordnet ist.

15. Seitenaufprall-Schutzeinrichtung nach einem der Ansprüche 8 bis 14, **dadurch gekennzeichnet, daß** der Gasgenerator (11) und der Kopf-Gassack (3) mittels einer sie umgebenden Folie (2) oder eines Kunststoffrohres (28) auf der Montageplatte (9) vormontiert sind.

16. Seitenaufprall-Schutzeinrichtung nach einem der vorstehenden Ansprüche, **dadurch gekennzeichnet, daß** das Verkleidungsteil (17) im Bereich des Kopf-Gassacks (3) eine sich durch den Entfaltungsvorgang des Kopf-Gassacks (3) öffnende Klappe (19) umfaßt.

17. Seitenaufprall-Schutzeinrichtung nach Anspruch 16, **dadurch gekennzeichnet, daß** die Klappe (19) durch Sollbruchstellen (21) im Verkleidungsteil (17) gebildet ist.

18. Seitenaufprall-Schutzeinrichtung nach Anspruch 16 oder 17, **dadurch gekennzeichnet, daß** eine Einrichtung zum Begrenzen des maximalen Öffnungswinkels der Klappe (19) vorgesehen ist.

19. Seitenaufprall-Schutzeinrichtung nach Anspruch 18, **dadurch gekennzeichnet, daß** die Einrichtung zumindest ein Fangband (27) umfaßt, das einerseits an der Klappe (19) und andererseits am Dachrahmen (5) befestigt ist.

20. Seitenaufprall-Schutzeinrichtung nach einem der Ansprüche 16 bis 19, **dadurch gekennzeichnet, daß** die Geometrie der Klappe (19) und ihr maximaler Öffnungswinkel so auf den Kopf-Gassack (3) abgestimmt sind, daß die Klappe (19) die Entfaftungsrichtung des Kopf-Gassacks (3) schräg in Richtung zur Seitenscheibe (25) lenkt.

21. Seitenaufprall-Schutzeinrichtung nach einem der Ansprüche 1 bis 15, **dadurch gekennzeichnet, daß** das Verkleidungsteil (17) so am Dachrahmen (5) befestigt ist, daß sich der Kopf-Gassack (3) zwischen dem Verkleidungsteil (17) und dem Dachrahmen (5) beim Entfaltungsvorgang hindurchschieben kann.

22. Seitenaufprall-Schutzeinrichung nach einem der vorhergehenden Ansprüche, **dadurch gekennzeichnet, daß** der Gassack (3) in einem Schnitt quer zu seiner Längserstreckung einen geschlossenen Umfang hat.

23. Seitenaufprall-Schutzeinrichtung nach einem der vorhergehenden Ansprüche, **dadurch gekennzeichnet, daß** der Gassack (3) im entfalteten Zustand teilweise die B-Säule des Fahzeugs abdeckt.

## Claims

1. A lateral impact protective device for vehicle occupants, comprising an inflatable head gas bag (3) which in the folded, installed condition is disposed underneath a cladding part (17) on the roof frame (5) of a vehicle, **characterized in that** the head gas bag (3) is non-folded in longitudinal direction and can be attached on points along the roof frame (5) at least at its two outer ends (7) in longitudinal direction of the vehicle, which are the upper ends of the gas bag in the unfolded condition.

2. The lateral impact protective device as claimed in claim 1, **characterized in that** the head gas bag (3) is provided with attachment eyes at its ends (7) attached to the roof frame (5).

3. The lateral impact protective device as claimed in claim 1 or 2, **characterized in that** an elongated gas generator (11) associated to the head gas bag (3) is disposed parallel to the folded head gas bag (3) underneath the cladding part (17).

4. The lateral impact protective device as claimed in claim 3, **characterized in that** the gas generator (11) has a cylindrical outline.

5. The lateral impact protective device as claimed in claim 3 or 4, **characterized in that** the gas generator (11) has gas outflow openings (33) distributed at its outer peripheral surface.

6. The lateral impact protective device as claimed in any of claims 3 to 5, **characterized in that** the gas generator (11) is disposed in the middle third of the head gas bag (3) in longitudinal direction of the folded head gas bag (3).

7. The lateral impact protective device as claimed in claim 6, **characterized in that** the gas generator (11) maximally extends along the middle third of the folded head gas bag (3).

8. The lateral impact protective device as claimed in any of the preceding claims, **characterized by** a mounting plate (9) to be attached to the roof frame (5) and on which a gas generator (11) and the head gas bag (3) are pre-mounted.

9. The lateral impact protective device as claimed in any of the preceding claims, **characterized in that** the gas generator (11 ) is disposed in the interior of the head gas bag (3).

10. The lateral impact protective device as claimed in claim 8 and 9, **characterized in that** the mounting plate (9) is disposed in the interior of the head gas bag (3).

11. The lateral impact protective device as claimed in claim 10, **characterized in that** on the mounting plate (9) a part of at least one screw/nut connection (35, 37) is arranged in a non-rotatable fashion for the attachment of the lateral impact protective device (1) and an opening is provided at the associated place on the head gas bag (3) through which a screw shank may extend.

12. The lateral impact protective device as claimed in claim 11, **characterized in that** the mounting plate (9) can be connected with an adapter plate (29) disposed outside the head gas bag (3), which adapter plate can be fixed to the roof frame (5).

13. The lateral impact protective device as claimed in any of the preceding claims, **characterized in that** the mounting plate (9) is designed in the form of a hose clamp and engages around the gas generator (11), and that means for the attachment of the mounting plate (9) serve as means for clamping the mounting plate (9) designed in the form of a hose clamp.

14. The lateral impact protective device as claimed in claim 8 or 9, **characterized in that** the mounting plate (9) is disposed outside the head gas bag.

15. The lateral impact protective device as claimed in any of claims 8 to 14, **characterized in that** the gas generator (11) and the head gas bag (3) are pre-mounted on the mounting plate (9) by means of a foil (2) surrounding the same or by means of a plastic tube (28).

16. The lateral impact protective device as claimed in any of the preceding claims, **characterized in that** the cladding part (17) has a flop (19) adjacent to the head gas bag (3), said flop being adapted to open due to the unfolding of the head gas bag (3).

17. The lateral impact protective device as claimed in claim 16, **characterized in that** the flop (19) is defined by predetermined breaking points (21) in the cladding part (17).

18. The lateral impact protective device as claimed in claim 16 or 17, **characterized by** means for limiting the maximum angle of opening of the flop (19).

19. The lateral impact protective device as claimed in claim 18, **characterized in that** the means comprise at least one limiting strap (27) which on the one hand is attached to the flop (19) and on the other hand to the roof frame (5).

20. The lateral impact protective device as claimed in any of claims 16 to 19, **characterized in that** the geometry of the flop (19) and the maximum angle of opening thereof are so matched to the head gas bag (3) that the flop (19) steers the direction of unfolding of the head gas bag (3) obliquely towards the side window (25).

21. The lateral impact protective device as claimed in any of claims 1 to 15, **characterized in that** the cladding part (17) is attached to the roof frame (5) such that the head gas bag (3) may deploy between the cladding part (17) and the roof frame (5) during unfolding.

22. The lateral impact protective device as claimed in any of the preceding claims, **characterized in that** the gas bag (3) has a closed circumference in a section transverse to its longitudinal extension.

23. The lateral impact protective device as claimed in any of the preceding claims, **characterized in that** in the unfolded condition the gas bag (3) partly covers the B-column of the vehicle.

## Revendications

1. Dispositif de protection des occupants d'un véhicule contre les impacts latéraux, comprenant un coussin à gaz de protection de tête (3) gonflable qui, à l'état plié et monté, est agencé sous une pièce de revêtement (17) au cadre de toit (5) d'un véhicule, **caractérisé en ce que** le coussin à gaz de protection de tête (3) n'est pas plié en direction longitudinale et est susceptible d'être fixé ponctuellement au cadre de toit (5) au moins à ses deux extrémités (7) qui sont extérieures en direction longitudinale du véhicule et supérieures à l'état déployé.

2. Dispositif de protection contre les impacts latéraux selon la revendication 1, **caractérisé en ce que** le coussin à gaz de protection de tête (3) est pourvu d'oeillets de fixation à ses extrémités (7) fixées au cadre de toit (5).

3. Dispositif de protection contre les impacts latéraux selon la revendication 1 ou 2, **caractérisé en ce qu'**un générateur de gaz (11) allongé, associé au coussin à gaz de protection de tête (3), est agencé parallèlement au coussin à gaz de protection de tête (3) plié, sous la pièce de revêtement.

4. Dispositif de protection contre les impacts latéraux selon la revendication 3, **caractérisé en ce que** le générateur de gaz (11) a un contour extérieur de forme cylindrique.

5. Dispositif de protection contre les impacts latéraux selon la revendication 3 ou 4, **caractérisé en ce que** le générateur de gaz (11) a des orifices de sortie (33) de gaz répartis sur son enveloppe extérieure périphérique.

6. Dispositif de protection contre les impacts latéraux selon l'une quelconque des revendications 3 à 5, **caractérisé en ce que** le générateur de gaz (11 ) est agencé dans la direction longitudinale du coussin à gaz de protection de tête (3), dans le tiers central du coussin à gaz de protection de tête (3).

7. Dispositif de protection contre les impacts latéraux selon la revendication 6, **caractérisé en ce que** le générateur de gaz s'étend au maximum sur le tiers central du coussin à gaz de protection de tête (3).

8. Dispositif de protection contre les impacts latéraux selon l'une quelconque des revendications précédentes, **caractérisé par** une plaque de montage (9) susceptible d'être fixée sur le cadre de toit (5), sur laquelle un générateur de gaz (11) et le coussin à gaz de protection de tête (3) sont montés au préalable.

9. Dispositif de protection contre les impacts latéraux selon l'une quelconque des revendications précédentes, **caractérisé en ce que** le générateur de gaz (11 ) est agencé à l'intérieur du coussin à gaz de protection de tête (3).

10. Dispositif de protection contre les impacts latéraux selon la revendication 9, **caractérisé en ce que** la plaque de montage (9) est agencée à l'intérieur du coussin à gaz de protection de tête (3).

11. Dispositif de protection contre les impacts latéraux selon la revendication 10, **caractérisé en ce que** sur la plaque de montage (9), une partie d'au moins d'une liaison à vis et écrou (35, 37) est agencée solidaire en rotation pour fixer le dispositif de protection (1 ) contre les impacts latéraux et **en ce que** sur l'emplacement associé dans le coussin à gaz de protection de tête (3) se trouve un orifice à travers lequel peut s'étendre une tige de vis.

12. Dispositif de protection contre les impacts latéraux selon la revendication 11, **caractérisé en ce que** la plaque de montage (9) est susceptible d'être reliée à une plaque d'adaptation (29) agencée en dehors du coussin à gaz de protection de tête (3), laquelle est susceptible d'être bloquée sur le cadre de toit (5).

13. Dispositif de protection contre les impacts latéraux selon l'une quelconque des revendications précédentes, **caractérisé en ce que** la plaque de montage (9) est réalisée en forme de collier et entoure le générateur de gaz (11) et **en ce qu'**un dispositif pour fixer la plaque de montage (9) sert de dispositif pour serrer la plaque de montage (9) réalisée en forme de collier.

14. Dispositif de protection contre les impacts latéraux selon la revendication 8 ou 9, **caractérisé en ce que** la plaque de montage (9) est agencée en dehors du coussin à gaz de protection de tête (3).

15. Dispositif de protection contre les impacts latéraux selon l'une quelconque des revendications 8 à 14, **caractérisé en ce que** le générateur de gaz (11) et le coussin à gaz de protection de tête (3) sont montés au préalable sur la plaque de montage (9) au moyen d'une feuille (2) qui les entoure ou d'un tube (28) en matière plastique.

16. Dispositif de protection contre les impacts latéraux selon l'une quelconque des revendications précédentes, **caractérisé en ce que** la pièce de revêtement (17) comprend dans la zone du coussin à gaz de protection de tête (3) un clapet (19) qui s'ouvre lors du processus de déploiement du coussin à gaz de protection de tête (3).

17. Dispositif de protection contre les impacts latéraux selon la revendication 16, **caractérisé en ce que** le clapet (19) est défini par des points destinés à la rupture (21) dans la pièce de revêtement (17).

18. Dispositif de protection contre les impacts latéraux selon la revendication 16 ou 17, **caractérisé en ce qu'**il est prévu un dispositif qui sert à limiter l'angle maximal d'ouverture du clapet (19).

19. Dispositif de protection contre les impacts latéraux selon la revendication 18, **caractérisé en ce que** le dispositif comprend au moins une bande de garde (27) qui est fixée d'une part sur le clapet (19) et d'autre part sur le cadre de toit (5).

20. Dispositif de protection contre les impacts latéraux selon l'une quelconque des revendications 16 à 19, **caractérisé en ce que** la géométrie du clapet (19) et son angle d'ouverture maximum sont adaptés au coussin à gaz de protection de tête (3) de telle sorte que le clapet (19) dirige en oblique la direction de déploiement du coussin à gaz de protection de tête (3) en direction de la vitre latérale (25).

21. Dispositif de protection contre les impacts latéraux selon l'une quelconque des revendications 1 à 15, **caractérisé en ce que** la pièce de revêtement (17) est fixée au cadre de toit (5) de telle sorte que le coussin à gaz de protection de tête (3) puisse se faufiler entre la pièce de revêtement (17) et le cadre de toit (5) lors du processus de déploiement.

22. Dispositif de protection contre les impacts latéraux selon l'une quelconque des revendications précédentes, **caractérisé en ce que** dans une coupe transversale à son étendue longitudinale, le coussin à gaz de protection de tête (3) a un pourtour fermé.

23. Dispositif de protection contre les impacts latéraux selon l'une quelconque des revendications précédentes, **caractérisé en ce qu'**à l'état déployé, le coussin à gaz de protection de tête (3) recouvre partiellement la colonne B du véhicule.
